# EUROPEAN PATENT SPECIFICATION

(11) **EP 1 780 154 B1**
(45) Date of publication and mention of the grant of the patent: **01.07.2009**
(21) Application number: 05110245.7
(22) Date of filing: 01.11.2005
(51) Int. Cl.: B65G 53/52, B65G 53/54

(54) **Method and system for vacuum conveying of bulk material**
Verfahren und Vorrichtung zur Vakuumförderung von Schüttgut
Procédé et système pour le transport sous vide de matière en vrac

(43) Date of publication of application: 02.05.2007
(73) Proprietor: Sun Chemical B.V., 1382 LV Weesp (NL)
(72) Inventor: Strohschein, Dietmar, 37723 Seesen (DE)
(74) Representative: Fuchs

(56) References cited:
- DE-C1- 326 803
- GB-A- 1 570 587
- GB-A- 2 392 895
- JP-A- 58 223 472
- US-A- 2 478 326
- US-A- 3 265 445
- US-A- 4 559 813

## Description

### Field of Invention

The present invention relates to a method and system for vacuum conveying of bulk material and relates more specifically to a method, a system, a controlling device and a computer program product for preventing clogging of components of a vacuum conveying system used for vacuum conveying bulk material.

### Background of Invention

Vacuum conveying systems for vacuum conveying of bulk material are well-known. In vacuum conveying systems a vacuum blower usually generates vacuum or negative pressure in a system of tubes and/or hoses used for conveying the bulk material for conveying bulk material from a bulk material discharging section, which is used for discharging bulk material into the system, to a downstream bulk material receiving section, e.g. a storage container or processing stage. The vacuum blower generates an air flow in the tubes and/or hoses which conveys the bulk material.

A general problem with vacuum conveying of bulk material, i.e. of material consisting of free flowing particles or powdery material, such as powder, ground stone powder or toner particles, in processing plants is adherence of bulk material to the inner circumferential walls of tubes or hoses used for conveying the bulk material, which causes clogging of the tubes or hoses and imparts an excessive load onto the vacuum blower generating the conveying air flow.

One approach for avoiding adherence of powdery particles to the inner circumferential walls of the conveying tubes is to impose vibrations to the tubes by mechanical vibrators. However, imposing mechanical vibrations to the tubes may result in an excessive wearing down and even destruction of the tubes, which might give rise to the formation of small cracks and holes in the walls of the tubes. Such cracks and holes could cause an unwanted leakage and result in an uncontrolled leaking of powdery materials towards the outside, which is undesirable.

On the other hand, the above mentioned approach of imposing mechanical vibrations to conveying hoses or tubes of a vacuum conveying system is not suitable, because the walls of the conveying hoses or tubes will be more prone to wear and tear and mechanical destructions.

### Prior art

DE326803 discloses a system for vacuum conveying of bulk material comprising a plurality of hoppers, tubes and a vacuum blower for generating a conveying gas flow within the tubes. However, DE326803 does not disclose a system or method for conveying bulk material including a means for preventing the bulk material from adhering to the tubes. The disclosed system therefore suffers the drawback of easily plugged tubes.

JP58 223472 A discloses flexible hoses that can be inflated in order to reduce adherence of bulk material to the flexible walls. However, D2 does not address a vacuum conveying system or method suitable to convey bulk material without plugging of tubes or hoses.

US2 478 326 A discloses a tube with flexible inner linings comprising air conduits for application of pressurized gas in order to blow the flexible inner linings and thereby preventing the bulk material from adhering to said flexible inner linings. However, it is not disclosed to apply a vacuum to said conduits in order to suck the inner linings towards the rigid tube for optimum conduit of the bulk material during normal operation.

### Summary of Invention

Accordingly, the present invention is directed to a method of vacuum conveying of bulk material or powdery material in a vacuum conveying system comprising a plurality of tubes and hoses for conveying bulk material, at least some of said tubes having flexible walls.

It is an object of the present invention to provide an efficient vacuum conveying method and system for preventing adherence of bulk material or powdery material or clogging of a vacuum conveying system of the aforementioned type.

According to still another aspect of the present invention there is to be provided a computer program product for use in the aforementioned vacuum conveying system for controlling the controlling device of the vacuum conveying system such as to efficiently prevent adherence of bulk material or powdery material and clogging of the system.

The above and further objects are achieved by a method according to claim 1, by a vacuum conveying system according to claim 13 and by a computer program product according to claim 21. Further advantageous embodiments are the subject-matter of the dependent claims.

According to a first aspect of the present invention, there is provided a method for vacuum conveying bulk material in a vacuum conveying system according to claim 1.

By applying high pressure gas the flexible circumferential wall or flexible section of the tube is inflated and thus locally stretched, which causes adhering particles to flake or peel off from the flexible circumferential wall or section. Thus, according to the present invention adherence of powdery or bulk material and even clogging of the vacuum conveying system is eliminated.

Thus, in principle according to the present invention the vacuum conveying system comprises both rigid tubes and flexible hoses depending on the design of the overall vacuum conveying system. In principle, the tubes may comprise subsections having flexible walls. However, preferably all conveying tubes of the vacuum conveying system are formed as hoses having flexible circumferential walls. At certain subsections of the system, in particular at bulk material discharging sections for feeding the powdery or bulk material and at bulk material receiving sections, such as filters or storage vessels, the circumferential walls may also comprise rigid walls. At such sections it is, however, preferred to provide a double-layer structure of the se walls, including a tubular outer wall, which is rigid, and a lining of a flexible material covering the inner surface of the tub ular wall. Preferably, the lining is linked with the inner surface only at discrete locations spaced apart from each other so that a free space can remain between the inner surface and the lining, which can be used for applying high-pressure air or vacuum to either inflate or stretch the flexible lining or to suck the flexible lining onto the inner surface of the respective section of the vacuum conveying system. Thus, adherence of powdery or bulk material on the inner surface of the flexible lining is effectively eliminated.

According to another embodiment of the present invention valves disposed at respective ends of said vacuum conveying system and/or dividing said vacuum conveying system into subsections are closed, when said pressurized gas is applied to said vacuum conveying system or to a respective subsection thereof so that those sections of the system comprising flexible walls can be inflated to eliminate adherence of powdery or bulk material.

According to another embodiment of the present invention the method comprises additionally the step of resuming a normal operation of the vacuum conveying system comprising the steps of: disconnecting the pressurized gas from the vacuum conveying system; and connecting the vacuum blower with the vacuum conveying system for generating the flow of conveying gas; wherein the step of resuming normal operation further comprises the steps of: slowly opening a valve used for disconnecting the bulk material receiving section while keeping closed valves used for connecting said bulk material discharging section for slowly letting off the high pressure gas prevailing within said vacuum conveying system and opening said valves used for connecting said bulk material discharging section for causing conveyance of bulk material from said discharging section to said bulk material receiving section. Thus, in a first step of the step of resuming normal operation the overpressure prevailing in the vacuum conveying system is let off and thus reduced to atmospheric pressure whereas, in a second step, the tubes and/or hoses of the vacuum conveying system are again connected with the vacuum blower for building up again the conveying gas flow used for conveying the powdery or bulk material in the system. Finally, valves or shutter means of the bulk material discharging sections are selectively opened again to disperse bulk material in the conveying gas flow and create a flow of fluidized bulk material to be conveyed in the vacuum conveying system.

According to another embodiment of the present invention the steps of disconnecting said vacuum blower, applying pressurized gas and resuming a normal operation of said vacuum conveying system are performed repeatedly until a satisfactory condition, in particular a satisfactory effective conduit or flow cross section, of the vacuum conveying system is obtained.

According to another embodiment of the present invention the vacuum conveying method is performed fully automatically under the control of a suitable controlling device for controlling the timings for opening/closing the valves of the vacuum conveying system. Accordingly, another related aspect of the present invention is directed to a controlling device for controlling a vacuum conveying system such as to perform the steps of the above vacuum conveying method. For determining the degree of adherence or clogging of the vacuum conveying system, a measured value indicative of the degree of adherence or clogging of the vacuum conveying system or of a subsection thereof is determined. Based on the measured value the steps of disconnecting said vacuum blower and applying pressurized gas are initiated automatically, by the controller device, if the measured value exceeds a predetermined threshold value representative of a satisfactory degree of adherence or clogging of the vacuum conveying system. The measured value can correspond e.g. to a power consumption of the vacuum blower and/or to a pressure drop in the vacuum conveying system. For controlling the vacuum conveying method, the valves and the vacuum blower of the system are controlled automatically in accordance with the above method steps.

Another related aspect of the present invention relates to a software or computer program product, comprising computer program code means for causing the afore-mentioned controlling device to perform the steps of a method according to the present invention, when executed by a data processing means of said controlling device, such as a general-purpose computer, a dedicated data processor, an application specific integrated circuit (ASIC) or the like.

### Brief Description of the Drawings

Hereinafter the present invention will be described with reference to exemplary embodiments and drawings, from which further advantages, features and objects will become apparent to a person skilled in the art and wherein:
- Fig. 1: shows a schematic diagram of a vacuum conveying system according to the present invention;
- Fig 2: is a schematic cross section of a hose for use in the vacuum conveying system according to Fig. 1; and
- Fig. 3: is a schematic flow diagram of a control method according to the present invention.

Throughout the drawings identical reference numerals relate to identical or substantially equivalent elements or groups of elements.

### Detailed Description of Exemplary Embodiments

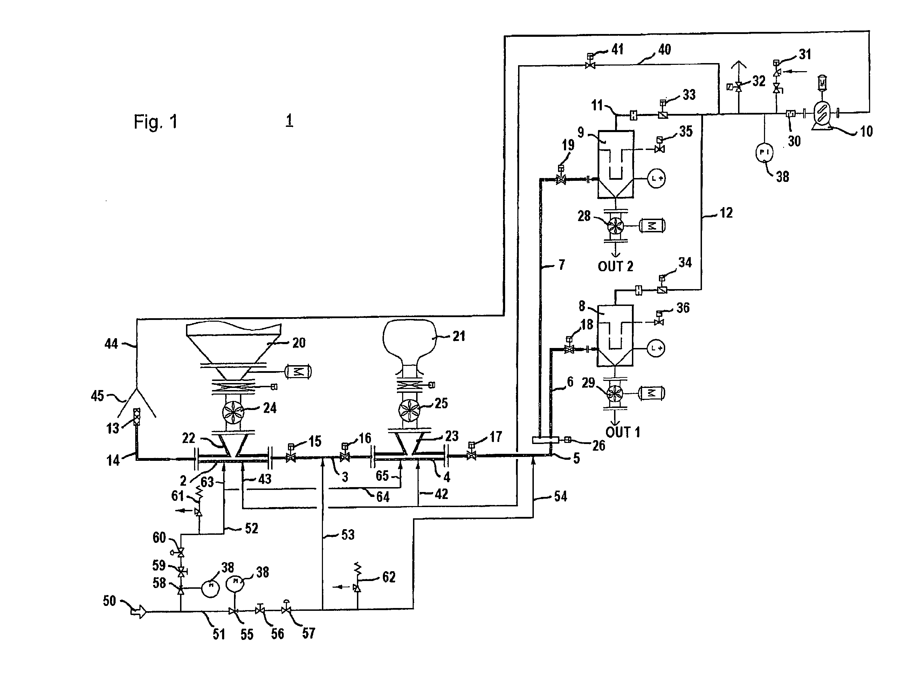

In the following, the overall configuration of the vacuum conveying system 1 will be described with reference to Fig. 1 first Referring to Fig. 1, the vacuum conveying system 1 consists of a plurality of conveying hoses 5 to 7 for connecting the bulk material receiving sections 8, 9 with bulk material discharging sections 2, 4. More specifically, the first bulk material discharging section consists of a tube 2 having a hopper 22, which is unitarily provided with the tube 2. The first bulk material discharging section 2 is connected, via rotary valve 24, with a silo container 20 used for storing bulk material, such as a powder. The first discharging section 2 is connected, via connecting hose 3, with a second bulk material discharging section 4 of similar configuration. More specifically, the second bulk material discharging section 4 consists of a tube 4 having a hopper 23, which is unitarily connected with the tube 4. The second bulk material discharging section 4 is connected, via rotary valve 25, to a bag 21 used for storing bulk material, such as a powder. Squeeze valves 15, 16 are disposed at the ends of the connecting hose 3 for disconnecting the first discharging section 2 and the connecting hose 3, respectively, from the remainder of the conveying system 1.

The second discharging section 4 is connected, via hose 5, to a diverter valve 26 used to switch vacuum conveyance either to the first bulk material receiving section 8 (as indicated in Fig. 1) or to a second bulk material receiving section 9. In the exemplary embodiment according to Fig. 1 both bulk material receiving sections 8, 9 are indicated as filter receivers each having a filter structure for separating the air used for conveying the bulk material from the bulk material itself. In operation, the powdery particles of the bulk material collide with the respective filter structure and then fall down towards a hopper and are discharged, via rotary valve 29 and 28, respectively, to a first outlet OUT1 or a second outlet OUT2, respectively, whereas the separated air stream is sucked, via hose 12 and 11, respectively, by the common vacuum blower 10. Via valves 35, 36 a pulsating stream of air can be selectively applied to the filter structure of the respective filter section 9 and 8, respectively, for imposing mechanical vibrations and loosening adhering powdery particles from the respective filter structure.

As shown in Fig. 1, squeeze valves 18, 19 can be used for closing the ends of the hoses 6, 7 and disconnecting the vacuum blower 10. The filter sections 8, 9 are disposed in pressure-tight boxes. On the top cover of the filter sections 8, 9 there is provided an orifice so that the interior of the filter sections 8, 9 communicates with the hose 12, 11 and the vacuum blower 10. Butterfly valves 34, 33 are provided for disconnecting the filter sections 8, 9 from the vacuum blower 10.

As shown in Fig. 1, the first bulk material discharging section 2 is connected, via hose 14, with an air inlet 13. In a normal operating condition and in the condition of the diverter valve 26 as indicated in Fig. 1, the valves 15, 16, 17, 5, 18, 34 are open so that the inlet of the vacuum blower 10 generates a stream of warm air, which flows e.g. from air inlet 13, via hose 14, tube 2 of the first discharging section, the connecting hose 3, the tube 4 of the second discharging section, conveying hose 5 and conveying hose, towards the bulk material receiving section 8, from where the air is sucked, via line 12, towards the inlet of the vacuum blower 10. Thus, bulk material, which is falling down from the silo container 20 and/or storing bag 21, is dosed by the rotary valves 24, 25 into the associated hopper 22, 23 in accordance with the stream of air in the vacuum conveying system. Furthermore, the bulk material is finely dispersed in the air flow. The resulting fluid bulk material is conveyed by the air flow towards the bulk material receiving section 8, where the bulk material is again separated from the air and discharged, via rotary valve 29, from outlet OUT1. On the other hand, if the diverter valve 26 is switched to the illustrated alternative position, the resulting fluid bulk material is conveyed by the air flow towards the bulk material receiving section 9, where the bulk material is again separated from the air and discharged, via rotary valve 28, from outlet OUT2.

As shown in Fig. 1, a filter 30 is provided upstream from the inlet of the vacuum blower 10 to protect the vacuum blower 10. Upstream from the filter 30, there is provided an air inlet valve that is opened when the butterfly valve 33 is closed, for establishing a stand-by operating condition of vacuum blower 10, as will be explained in more detail below. In a normal operating condition of the vacuum conveying system 1, the vacuum breaking valve 32 is closed so that the vacuum blower 10 generates a vacuum in hoses 11, 40, depending on the state of the valves 33 and 41, respectively. Furthermore, a pressure indicator 38 is disposed upstream from the vacuum blower 10 for measuring the pressure upstream from the vacuum blower 10 for obtaining a measured value representing a pressure drop upstream from the vacuum blower 10. As an alternative or auxiliary measure, also the power consumption of the vacuum blower 10 can be measured. As will become apparent to a person skilled in the art, the above or other measured values are representative for the effective conduit or flow cross section of the vacuum conveying system 1 and thus are a good indicator for monitoring the adherence of bulk or powdery material to the inner walls of the conveying tubes and/or hoses of the vacuum conveying system 1 and for the degree of clogging of the vacuum conveying system 1.

According to the exemplary embodiment shown in Fig. 1, the hopper 22 and the tube 2 of the first bulk material discharging section consists of a metallic casing with a lining of a flexible, pressure-tight material, such as rubber. Preferably, the flexible lining is not bonded to the casing but instead only clamped to the metallic casing at a plurality of discrete locations spaced apart from each other, e.g. at the connecting flanges between the tube 2 and adjacent hose 14 and 3, respectively, and at the connecting flanges between the hopper 22 and the adjacent rotary valve 24. The second bulk material discharging section 4 has a similar configuration so that a detailed description thereof can be omitted.

As shown in the bottom part of Fig. 1, according to the present invention the vacuum conveying system further comprises a source of pressurized air, i.e. of high pressure air or of air under a pressure above the suction pressure in the vacuum conveying system. In Fig. 1, the source of pressurized air is schematically indicated by arrow 50. More specifically, the source of pressurized air comprises an inlet 50 for high pressure air, which communicates, via lines 52 and 63, with a space between the tube 2 and hopper 22 and the associated inner lining of flexible material of the first bulk material discharging section, via lines 52, 64 and 65, with a space between the tube 4 and hopper 23 and the associated inner lining of the second bulk material discharging section, and, via line 54, with hose 5, if diaphragm or solenoid valve 60 and diaphragm or solenoid valve 57 are opened. Pressure reducing valves 58, 55, with associated pressure indicators 38, can be used for adjusting the pressure of the high pressure air. Pressure safety valves 61, 62 are provided, for safety reasons, for discharging high pressure air, e.g. in case of emergency or for maintenance purposes.

As shown in Fig. 1, the inlet of vacuum blower 10 also communicates, via hoses 40, 43, with the space between the tube 2 and hopper 22 and the associated inner lining of flexible material of the first bulk material discharging section and, via hoses 40, 42, with the space between the tube 4 and hopper 23 and the associated inner lining of the second bulk material discharging section. Thus, if the ball valve 41 is opened any overpressure existing in hoses 40, 42 and 43 can be released.

In the normal operating condition of the vacuum conveying system 1, the inlet 50 for high pressure air and/or the valves 60, 56 are closed so that no overpressure is generated in order to push away the inner linings of flexible material from the tube 2, 3 and the hopper 22, 23 of the first and second bulk material discharging section, respectively, for stretching the inner linings and thus removing or reducing the adherence of powdery or bulk material to the inner linings. Furthermore, in the normal operating condition of the vacuum conveying system 1, the ball valve 41 is open so that the vacuum blower 10 generates a vacuum on line 40 in order to suck the inner linings of flexible material to the tube 2, 3 and the hopper 22, 23 of the first and second bulk material discharging section, respectively, for ensuring an optimum conduit in the first and second bulk material discharging section, respectively.

As shown in Fig. 1, the outlet of the vacuum blower 10 is connected with hose 44, which ends in a hopper-shaped outlet 45 directly opposite to the air inlet 13 of the vacuum conveying system 1. Thus, the warm and dry air exiting from the outlet of the vacuum blower 10 is recycled and enters the air inlet 13. Thus, the conveying flow of air in the tubes and/or hoses of the vacuum conveying system 1 is relatively warm and dry, which further prevents clogging and adhering of powdery or bulk material in the vacuum conveying system 1.

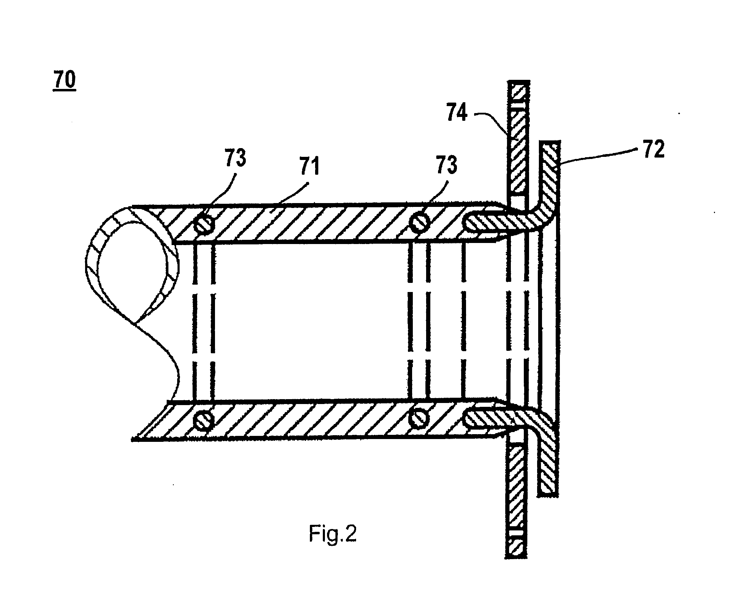

According to a preferred embodiment according to the present invention the main conveying lines of the vacuum conveying system 1 consist of hoses of the type shown in Fig. 2 or at least comprise portions having flexible walls, like the hose shown in Fig. 2. Fig. 2 shows a partial cross sectional view of a hose 70 for use in the vacuum conveying system according to the present invention. As shown in Fig. 2, the hose 70 comprises a tubular wall 71 of a flexible material, such as rubber. Typical outer diameters of the hose 70 lie in the range between approx. 50 mm to approx. 130 mm, depending on the throughput of the vacuum conveying system. At equidistant intervals of e.g. 800 to 1,000 mm, supporting coils or bearing rings 73 are embedded in the circumferential wall 71 of hose 70 in order to prevent an uncontrolled collapse of hose 70 and to ensure an appropriate effective conduit of hose 70. Furthermore, a flange 72 is embedded in the circumferential wall 71 at the end of hose 70, for connecting to an orifice 74 of another member of the vacuum conveying system, as will become apparent to a person skilled in the art. Typically, a hose used in a vacuum conveying system according to the present invention is adapted to withstand overpressures up to approx. 3 to 10 bar, depending on the effective throughput to be achieved.

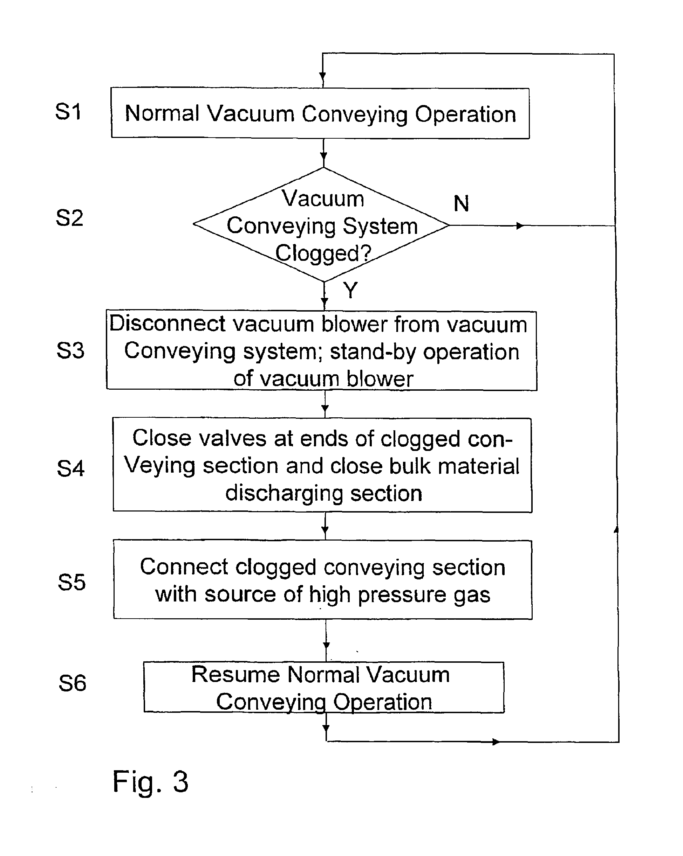

Referring to Fig. 1 and 3, a process cycle for removing adherence of powdery or bulk material to the circumferential walls of the hoses and/or to the inner linings of the bulk material discharging sections and of the hoppers will be described.

As shown in Fig. 3, the process cycle assumes that the system is initially working in a normal vacuum conveying operating condition (step S1) that will be described hereinafter. In the normal vacuum conveying operating condition (or normal operating condition), the valves 15-18 and 34 are open so that air entering the vacuum conveying system 1 via air inlet 13 is sucked by the vacuum blower 10 for generating a conveying air flow in the vacuum conveying system 1. The rotary valves 24, 25 are selectively opened so that bulk or powdery material stored in the silo container 20 and storing bag 21 can enter the associated hopper 2 and 4, respectively, to be dispersed in the conveying air flow in the respective bulk material discharging section 2, 4. The conveying air flow conveys the powdery or bulk material from the bulk material discharging section 22 and/or 23 to the bulk material receiving section (filter section) 8 and bulk material outlet OUT1. In the normal operating condition, the valve 41 is open so that the inner linings of flexible material are sucked against the associated casing of the respective bulk material discharging section 2, 4. Furthermore, the high pressure air inlet 50 and valves 60, 57 are closed in order to prevent that the inner linings of flexible material lift off from the associated casing of the respective bulk material discharging section 2, 4 and that the conveying hoses 3, 5 are inflated by the high pressure air.

During the above normal operating condition, powdery or bulk material may adhere to the inner walls of the hoses and/or inner linings, caused e.g. by agglomerating of powdery particles due to moisture of the conveying air flow. Adherence of powdery or bulk material to the inner walls of the hoses and/or inner linings will reduce the effective conduit or flow cross section of the vacuum conveying system 1 and will finally result in a clogged state, which is to be avoided. For this purpose, a measured value representative of the effective conduit of the vacuum conveying system is derived, e.g. the effective power consumption of the vacuum blower 10 or a pressure drop within the vacuum conveying system 1.

As shown in Fig. 3, in step S2 it is determined whether the vacuum conveying system is in a clogged state. For this purpose the measured value is compared with a predetermined threshold value representative of a minimum acceptable effective conduit of the vacuum conveying system 1. If it is determined in step S2 that the system is not in a clogged state, the process returns to step S1. On the other hand, if it is determined in step S2 that the system is in a clogged state, the process continues with step S3, which will be explained in the following.

First, in step S3 the rotary valves 24, 25 are closed to stop discharging of bulk or powdery material into the conveying air flow. Furthermore, the air control valve 31 of the vacuum blower 10 opens so that the conveying air flow in the vacuum conveying system stops and a stand-by operation of the vacuum blower 10 is started. As a next step, the squeeze valves 15-18 and 34 are closed to disconnect the vacuum blower 10 from the conveying hoses 3, 5 and 6, from the bulk material discharging sections 2, 4 and from the filter section 8. As a next step, the high pressure generating section is activated, by opening the inlet 50 for high pressure air and the valves 56 and 60. Thus, an overpressure regulated by the pressure reducing valves 58, 55 is applied to the bulk material discharging sections 2, 4 and to the conveying hoses 3, 5 and 6. Thus, the inner linings of flexible material are separated from the casings of the bulk material discharging sections and the flexible hoses 3, 5 and 6 are inflated or stretched to thus reduce or eliminate adherence of powdery or bulk material to inner walls of the vacuum conveying system 1. In this manner, steps S4 and S5 according to Fig. 3 are performed.

As will become apparent to a person skilled in the art, the valves 41, on the one hand, and 56, 60, on the other hand, may be actuated in such a manner as to inflate and deflate the flexible walls of the vacuum conveying system to thereby reduce adherence of bulk material to the flexible walls of the vacuum conveying system. As an alternative, the valves 41, 56 and 60 may also be actuated in such a manner that, before resuming normal operation of the vacuum conveying system, an idle pressure is measure in the vacuum conveying system and such that the flexible walls of the vacuum conveying system are inflated and deflated again if the idle pressure should still be too high, which usually is indicative of a clogging state of the vacuum conveying system.

Finally, the adhered particles are removed from the inner walls of the vacuum conveying system to a satisfactory extent, which can be controlled by varying the time period of the process cycle consisting of the steps S2 to S5 according to Fig. 3.

Referring to Fig. 3, as a next step the normal operating condition of the vacuum conveying system is resumed in step S6. For this purpose, the valves 56, 60 and/or the high pressure air inlet 50 are closed first. As a next step, the valves 17 and 18 are opened slowly so that the overpressure developed in the conveying hoses 5, 6 is slowly reduced. As a next step, the remaining squeeze valves 15 and 16 and the valve 34 are opened and the air control valve of the vacuum blower 10 are opened so that the conveying air flow in the vacuum conveying system builds up again, as described above. As a next step the rotary valves 24, 25 of the discharging sections are selectively actuated and reopened to cause dispersion of powdery or bulk material in the conveying air flow. Furthermore, the valve 41 is opened again so that the inner linings of flexible material of the discharging sections 2, 4 are sucked against the rigid casings of the discharging sections 2, 4, as described above. Finally, the normal operating condition is resumed and the process reverts to step S1.

If it is determined, in step S2, that the vacuum conveying system is still clogged, as derived by comparing the measured value with the predetermined threshold value, the cycle consisting of the steps S3 to S6 is performed again, until a satisfactory effective conduit of the vacuum conveying system is obtained again, as indicated by the afore-mentioned measured value.

As will become apparent to a person skilled in the art, the control valves of the vacuum conveying system according to the present invention are preferably electronic control valves that can be actuated in accordance with control signals output by a suitable controlling device. Accordingly, another closely related aspect of the present invention relates to a controlling device configured for performing the method steps as described above. According to the present invention, such a controlling device may be implemented using any kind of general purpose computer, processor, application-specific integrated circuit (ASIC) or similar data processing means. Of course, such a data processing means may comprise a volatile or nonvolatile memory for storing a computer program code configured to execute the method steps as described above when run on the data processing device of the controlling device. Thus, according to another preferred aspect of the present invention, the vacuum conveying method can be performed fully automatically, under the supervision of such a controlling device.

As will become apparent to a person skilled in the art, the vacuum conveying method and controlling device according to the present invention can be applied to conveying any kind of powdery or bulk material, including, but not limiting the present invention, powders of TiO₂, kaoline, chalk, in particular black chalk, and carbon black.

### List of Reference Numerals

- 1: vacuum conveying system
- 2: bulk material discharging section
- 3: connecting hose
- 4: bulk material discharging section
- 5: central conveying hose
- 6: conveying hose
- 7: conveying hose
- 8: bulk material receiving section
- 9: bulk material receiving section
- 10: vacuum blower
- 11: tube / hose
- 12: tube / hose
- 13: air inlet
- 14: hose
- 15: squeeze valve
- 16: squeeze valve
- 17: squeeze valve
- 18: squeeze valve
- 19: squeeze valve
- 20: bulk material container
- 21: bulk material containing bag
- 22: hopper
- 23: hopper
- 24: rotary valve
- 25: rotary valve
- 26: diverter valve
- 28: rotary valve
- 29: rotary valve
- 30: filter
- 31: air inlet valve
- 32: vacuum breaker
- 33: butterfly valve
- 34: butterfly valve
- 35: vibrator / inlet for pulse air
- 36: vibrator / inlet for pulse air
- 38: pressure indicator
- 40: tube
- 41: ball valve
- 42: connecting tube
- 43: connecting tube
- 44: line for recycled air (from vacuum blower 10)
- 45: outlet for recycled air
- 50: inlet for high pressure air
- 51: tube / hose
- 52: tube / hose
- 53: tube / hose
- 54: tube / hose
- 55: pressure reducing valve
- 56: hand valve
- 57: diaphragm or solenoid valve
- 58: pressure reducing valve
- 59: hand valve
- 60: diaphragm or solenoid valve
- 61: pressure safety valve
- 62: pressure safety valve
- 63: tube / hose for high pressure air
- 64: connecting tube or hose
- 65: tube / hose for high pressure air
- 70: hose
- 71: tubular hose body
- 72: flange
- 73: supporting coil or bearing ring
- 74: flange

## Claims

1. A method for vacuum conveying bulk material in a vacuum conveying system (1) comprising a plurality of tubes and hoses (3, 5-7),a vacuum blower (10) disposed at a first end of said plurality of tubes and hoses (3, 5-7) for generating a conveying gas flow within said plurality of tubes and hoses (3, 5-7) and a bulk material discharging section (2, 4) comprising a tube having a hopper (22, 23),
wherein the system is **characterized in that** the tube of the bulk material discharging section (2, 4) comprises a rigid outer wall with a flexible inner lining, at least some of the hoses comprise flexible walls (71), the vacuum blower is connected to the bulk material discharging section (2, 4) by air lines (40, 42, 43), and a controlling device is provided
for controlling valves (15-18, 34, 56, 60) of the vaccum conveying system
wherein the method comprises the following steps
a)
- generating a vacuum on the air line (40, 42, 43) in order to suck the flexible inner linings to the inner surface of the rigid tubes for ensuring an optimum conduit during normal operation;
b)
- stopping discharge of bulk material into the conveying air flow;
- disconnecting the vacuum blower from the conveying tubes and hoses (3, 5-7) and bulk material discharging section (2, 4);
- applying pressurized gas to bulk discharging sections (2, 4) and to hoses, such that the inner linings of flexible material are separated from the rigid tubes of the bulk discharging sections and for stretching or inflating said flexible walls (71) of the hoses to thereby reduce adherence of bulk material to said inner linings of discharging sections and to said flexible walls.

2. The method according to claim 1, wherein valves (15-19) disposed at respective ends of said vacuum conveying system (1) and/or dividing said vacuum conveying system (1) into subsections are closed, when said pressurized gas is applied to said vacuum conveying system (1) or to a respective subsection thereof.

3. The method according to claim 2, wherein said pressurized gas is applied by connecting a source (50) of pressurized gas with said vacuum conveying system (1) or with said respective subsection.

4. The method according to claim 3, wherein said source (50) of pressurized gas is a compressor for providing compressed air.

5. The method according to any of claims 2 to 4, further comprising the step of resuming a normal operating condition of said vacuum conveying system (1) comprising:
disconnecting said pressurized gas from said vacuum conveying system (1); and
connecting said vacuum blower (10) with said vacuum conveying system (1) for generating said flow of conveying gas;
said step of resuming said normal operating condition further comprising:
slowly opening a valve (18, 19) used for disconnecting said bulk material receiving section (8, 9) while keeping closed valves (15-17) used for connecting said bulk material discharging section (22, 23) for slowly building up a vacuum within said vacuum conveying system (1) and
opening said valves (15-17) used for connecting said bulk material discharging section (22, 23) for causing conveyance of bulk material from said discharging section to said bulk material receiving section (8, 9).

6. The method according to claim 5, wherein said steps of disconnecting said vacuum blower (10), applying pressurized gas and resuming said normal operating condition of said vacuum conveying system (1) are performed repeatedly.

7. The method according to any of the preceding claims, further comprising the step of applying said pressurized gas to a space provided between a tube casing and a lining material of said bulk material discharging section (22, 23) for reducing adherence of bulk material to said lining material.

8. The method according to any of the preceding claims, wherein said step of disconnecting said vacuum blower (10) comprises the steps of:
opening a gas inlet valve (31) of said vacuum blower, and
closing a valve (33) connecting said vacuum blower (10) with said vacuum conveying system (1);
for causing a stand-by operation of said vacuum blower (10).

9. The method according to any of the preceding claims, wherein said step of disconnecting said vacuum blower (10) further comprises:
disconnecting said bulk material discharging section (22, 23) or a bulk material storage container (20, 21) connected thereto from said vacuum conveying system (1).

10. The method according to any of the preceding claims, wherein said vacuum blower (10) pumps warm air to an inlet (13) at a second end of said vacuum conveying system (1).

11. The method according to any of the preceding claims, further comprising the steps of
determining a measured value indicative of an extent of clogging of said vacuum conveying system (1) or of a subsection thereof and
automatically initiating said steps of disconnecting said vacuum blower (10) and applying pressurized gas if said measured value exceeds a predetermined threshold value.

12. The method according to claim 10, wherein said measured value is representative for a power consumption of said vacuum blower (10) and/or a pressure drop in said vacuum conveying system (1).

13. A vacuum conveying system (1) for vacuum conveying bulk material, comprising:
a plurality of tubes and hoses (3, 5-7), a vacuum blower (10) disposed at a first end of said plurality of tubes and hoses (3, 5-7) for generating a conveying gas flow within said plurality of tubes and hoses (3, 5-7) and a bulk material discharging section (2, 4) comprising a tube having a hopper (22, 23),
**characterized in that**
the tube of the bulk material discharging section (2, 4) comprises a rigid outer wall with a flexible inner lining,
at least some of the hoses comprise flexible walls (71),
the vacuum blower is connected to the bulk material discharging section (2, 4) by air lines (40, 42, 43) able to suck the flexible inner linings to the inner surface of the rigid tubes for ensuring an optimum conduit during normal operation,
a controlling device is provided comprising
rotary values (24, 25) able to stop discharging of bulk material into the conveying air flow;
first valves (15-18, 34) for disconnecting the vacuum blower from the conveying tubes and hoses (3, 5-7) and bulk material discharging section (2, 4);
second valves (56, 60) for applying pressurized gas to bulk discharging sections (2, 4) and to hoses, such that the inner linings of flexible material are separated from the rigid tubes of the bulk discharging sections and for stretching or inflating said flexible walls (71) of the hoses to thereby reduce adherence of bulk material to said inner linings of discharging sections and to said flexible walls.

14. The vacuum conveying system according to claim 13, further comprising
a bulk material discharging section (22, 23) for discharging bulk material into said vacuum conveying system (1), and
a bulk material receiving section (8, 9) communicating with said vacuum blower (10), for receiving bulk material conveyed by said gas flow from said bulk material discharging section (22, 23).

15. The vacuum conveying system according to claim 13 or 14, further comprising at least one measuring means for measuring a measured value indicative of an extent of clogging of said vacuum conveying system (1) or of a subsection thereof, wherein said controlling device is configured for actuating said first and second control means if said measured value exceeds a predetermined threshold value.

16. The vacuum conveying system according to any of claims 13 to 15, wherein said first and second control means are configured for closing valves (15-19) disposed at respective ends of said vacuum conveying system (1) and/or dividing said vacuum conveying system (1) into subsections, when said pressurized gas is applied to said vacuum conveying system (1) or to a respective subsection thereof.

17. The vacuum conveying system according to claim 16, wherein said first and second control means are configured for closing said valves (15-19) such that said pressurized gas is applied by connecting a source (50) of pressurized gas with said vacuum conveying system (1) or with said respective subsection.

18. The vacuum conveying system according to any of claims 13 to 17, wherein said first and second control means are configured for performing a step of resuming a normal operating condition of said vacuum conveying system (1) comprising the steps of:
disconnecting said pressurized gas from said vacuum conveying system (1); and
connecting said vacuum blower (10) with said vacuum conveying system (1) for generating said flow of conveying gas;
said step of resuming said normal operating condition being performed such that:
a valve (18, 19) used for disconnecting said bulk material receiving section (8, 9) is opened slowly while keeping closed valves (15-17) used for connecting said bulk material discharging section (22, 23) for slowly building up a vacuum within said vacuum conveying system (1) and
said valves (15-17) used for connecting said bulk material discharging section (22, 23) are opened for causing conveyance of bulk material from said discharging section to said bulk material receiving section (8, 9).

19. The vacuum conveying system according to claim 18, wherein said first and second control means are configured such that said steps of disconnecting said vacuum blower (10), applying pressurized gas and resuming said normal operating condition of said vacuum conveying system (1) are performed repeatedly until said measured value is lower than said predetermined threshold value.

20. The vacuum conveying system according to any of claims 13 to 19, further comprising third control means configured for applying said pressurized gas to a space provided between a tube casing and a lining material of said bulk material discharging section (22, 23) for reducing adherence of bulk material to said lining material.

21. The vacuum conveying system according to any of claims 13 to 20, wherein said first and second control means are configured for enabling a stand-by operation of said vacuum blower (10) by:
opening a gas inlet valve (31) of said vacuum blower and
closing a valve (33) connecting said vacuum blower (10) with said vacuum conveying system (1) while performing said step of disconnecting said vacuum blower (10).

22. The vacuum conveying system according to any of claims 13 to 21, wherein said first and second control means are configured for disconnecting said bulk material discharging section (22, 23) or a bulk material storage container (20, 21) connected thereto from said vacuum conveying system (1) while performing said step of disconnecting said vacuum blower (10).

23. A computer program product, for use in a vacuum conveying system (1) according to any of claims 13 to 22, said computer program product comprising computer program code means for causing a controlling device of said vacuum conveying system (1) to perform the steps of a method according to any of claims 1 to 12, when executed by a data processing means of said controlling device.

## Patentansprüche

1. Ein Verfahren zur Saugförderung von Schüttgut in einem Saugfördersystem (1), das eine Vielzahl von Rohren und Schläuchen (3, 5-7), ein Sauggebläse (10), das an einem ersten Ende der Vielzahl von Rohren und Schläuchen (3, 5-7) zur Erzeugung eines Fördergasstroms innerhalb der Vielzahl von Rohren und Schläuchen (3, 5-7) angeordnet ist, und einen Schüttgut-Abgabeabschnitt (2, 4), umfassend ein Rohr mit einem Trichter (22, 23), umfasst,
wobei das System **dadurch gekennzeichnet ist, dass** das Rohr des Schüttgut-Abgabeabschnitts (2, 4) eine starre Außenwand mit einer flexiblen Auskleidung umfasst, mindestens einige der Schläuche flexible Wände (71) umfassen, das Sauggebläse mit dem Schüttgut-Abgabeabschnitt (2, 4) über Luftleitungen (40, 42, 43) verbunden ist und eine Steuervorrichtung zur Steuerung von Ventilen (15-18, 34, 56, 60) des Saugfördersystems bereitgestellt ist,
wobei das Verfahren die folgenden Schritte umfasst:
a)
- Erzeugen eines Vakuums an den Luftleitungen (40, 42, 43), um die flexiblen Auskleidungen an die innere Oberfläche der starren Rohre zur Sicherstellung einer optimalen Leitung im Normalbetrieb anzusaugen;
b)
- Beenden der Abgabe von Schüttgut in den Förderluftstrom;
- Abkoppeln des Sauggebläses von den Förderrohren und -schläuchen (3, 5-7) und dem Schüttgut-Abgabeabschnitt (2, 4);
- Anlegen eines unter Druck befindlichen Gases an die Schüttgut-Abgabeabschnitte (2, 4) und die Schläuche, so dass die Auskleidungen aus flexiblem Material von den starren Rohren der Schüttgut-Abgabeabschnitte getrennt werden, und zum Dehnen oder Aufweiten der flexiblen Wände (71) der Schläuche, um dadurch das Anhaften von Schüttgut an der Auskleidung der Abgabeabschnitte und der flexiblen Wände zu verringern.

2. Das Verfahren nach Anspruch 1, wobei die Ventile (15-19), die an jeweiligen Enden des Saugfördersystems (1) angeordnet sind und/oder das Saugfördersystem (1) in Unterabschnitte unterteilen, geschlossen sind, wenn das unter Druck befindliche Gas an das Saugfördersystem (1) oder an einen jeweiligen Unterabschnitt davon angelegt wird.

3. Das Verfahren nach Anspruch 2, wobei das unter Druck befindliche Gas angelegt wird, indem eine Quelle (50) eines unter Druck befindlichen Gases mit dem Saugfördersystem (1) oder mit dem jeweiligen Unterabschnitt verbunden wird.

4. Das Verfahren nach Anspruch 3, wobei die Quelle (50) des unter Druck befindlichen Gases ein Kompressor zur Bereitstellung von komprimierter Luft ist.

5. Das Verfahren nach einem der Ansprüche 2 bis 4, das ferner den Schritt der Wiederaufnahme eines normalen Betriebszustandes des Saugfördersystems (1) umfasst, das folgendes umfasst:
Abkoppeln des unter Druck befindlichen Gases von dem Saugfördersystem (1); und
Verbinden des Sauggebläses (10) mit dem Saugfördersystem (1) zur Erzeugung des Fördergasstroms;
wobei der Schritt der Wideraufnahme des normalen Betriebszustandes ferner folgendes umfasst:
langsames Öffnen eines Ventils (18, 19), das zum Abkoppeln des Schüttgut-Aufnahmeabschnitts (8, 9) verwendet wird, während die Ventile (15-17), die zum Verbinden des Schüttgut-Abgabeabschnitts (22, 23) verwendet werden, zum langsamen Aufbau eines Vakuums innerhalb des Saugfördersystems (1) geschlossen gehalten werden, und
Öffnen der Ventile (15-17), die zum Verbinden des Schüttgut-Abgabeabschnitts (22, 23) verwendet werden, um das Fördern von Schüttgut von dem Abgabeabschnitt zu dem Schüttgut-Aufnahmeabschnitt (8, 9) zu bewirken.

6. Das Verfahren nach Anspruch 5, wobei die Schritte der Abkopplung des Sauggebläses (10), des Anlegens des unter Druck befindlichen Gases und der Wiederaufnahme des normalen Betriebszustands des Saugfördersystems (1) wiederholt durchgeführt werden.

7. Das Verfahren nach einem der vorstehenden Ansprüche, das ferner den Schritt des Anlegens des unter Druck befindlichen Gases an einer Stelle, die zwischen einem Rohrgehäuse und einer Auskleidung des Schüttgut-Abgabeabschnitts (22, 23) bereitgestellt ist, zur Verringerung des Anhaftens von Schüttgut an die Auskleidung umfasst.

8. Das Verfahren nach einem der vorstehenden Ansprüche, wobei der Schritt der Abkopplung des Sauggebläses (10) die folgenden Schritte umfasst:
Öffnen eines Gaseinlassventils (31) des Sauggebläses; und
Schließen eines Ventils (33), das das Sauggebläse (10) mit dem Saugfördersystem (1) verbindet;
um einen Bereitschaftsbetrieb des Sauggebläses (10) zu bewirken.

9. Das Verfahren nach einem der vorstehenden Ansprüche, wobei der Schritt der Abkopplung des Sauggebläses (10) ferner folgendes umfasst:
Abkoppeln des Schüttgut-Abgabeabschnitts (22, 23) oder eines Schüttgut-Lagerbehälters (20, 21), das damit verbunden ist, von dem Saugfördersystem (1).

10. Das Verfahren nach einem der vorstehenden Ansprüche, wobei das Sauggebläse (10) warme Luft in einen Einlass (13) an einem zweiten Ende des Saugfördersystems (1) pumpt.

11. Das Verfahren nach einem der vorstehenden Ansprüche, das ferner die folgenden Schritte umfasst:
Bestimmen eines gemessenen Werts, der für ein Ausmaß der Blockierung des Saugfördersystems (1) oder eines Unterabschnitts davon bezeichnend ist, und
automatisches Initiieren der Schritte der Abkopplung des Sauggebläses (10) und Anlegen des unter Druck befindlichen Gases, falls der gemessene Wert einen vorbestimmten Grenzwert überschreitet.

12. Das Verfahren nach Anspruch 10, wobei der gemessene Wert für einen Energieverbrauch des Sauggebläses (10) und/oder einen Druckabfall in dem Saugfördersystem (1) repräsentativ ist.

13. Ein Saugfördersystem (1) zur Saugförderung von Schüttgut, das folgendes umfasst:
eine Vielzahl von Rohren und Schläuchen (3, 5-7), ein Sauggebläse (10), das an einem ersten Ende der Vielzahl von Rohren und Schläuchen (3, 5-7) zur Erzeugung eines Fördergasstroms innerhalb der Vielzahl von Rohren und Schläuchen (3, 5-7) angeordnet ist, und einen Schüttgut-Abgabeabschnitt (2, 4), das ein Rohr mit einem Trichter (22, 23) umfasst,
**dadurch gekennzeichnet, dass**
das Rohr des Schüttgut-Abgabeabschnitts (2, 4) eine starre Außenwand mit einer flexiblen Auskleidung umfasst,
mindestens einige der Schläuche flexible Wände (71) umfassen,
das Sauggebläse mit dem Schüttgut-Abgabeabschnitt (2, 4) über Luftleitungen (40, 42, 43) verbunden ist, das zum Ansaugen der flexiblen Auskleidungen an die innere Oberfläche der starren Rohre zur Sicherstellung einer optimalen Leitung im Normalbetrieb in der Lage ist,
eine Steuervorrichtung bereitgestellt ist, die folgendes umfasst:
Drehventile (24, 25), die zum Beenden der Abgabe von Schüttgut in den Förderluftstrom in der Lage sind;
erste Ventile (15-18, 34) zum Abkoppeln des Sauggebläses von den Förderrohren und -schläuchen (3, 5-7) und dem Schüttgut-Abgabeabschnitt (2, 4);
zweite Ventile (56, 60) zum Anlegen eines unter Druck befindlichen Gases an die Schüttgut-Abgabeabschnitte (2, 4) und die Schläuche, so dass die Auskleidungen aus flexiblem Material von den starren Rohren der Schüttgut-Abgabeabschnitte getrennt werden, und zum Dehnen oder Aufweiten der flexiblen Wände (71) der Schläuche, um dadurch das Anhaften von Schüttgut an der Auskleidung der Abgabeabschnitte und der flexiblen Wände zu verringern.

14. Das Saugfördersystem nach Anspruch 13, das ferner folgendes umfasst:
einen Schüttgut-Abgabeabschnitt (22, 23) zur Abgabe von Schüttgut in das Saugfördersystem (1), und
einen Schüttgut-Aufnahmeabschnitt (8, 9), der mit dem Sauggebläse (10) kommuniziert, zur Aufnahme von Schüttgut, das von dem Gasstrom aus dem Schüttgut-Abgabeabschnitt (22, 23) gefördert wird.

15. Das Saugfördersystem nach Anspruch 13 oder 14, das ferner mindestens ein Messmittel zum Bestimmen eines gemessenen Werts umfasst, der für ein Ausmaß der Blockierung des Saugfördersystems (1) oder eines Unterabschnitts davon bezeichnend ist, wobei die Steuervorrichtung zur Betätigung der ersten und zweiten Steuermittel konfiguriert ist, falls der gemessene Wert einen vorbestimmten Grenzwert überschreitet.

16. Das Saugfördersystem nach einem der Ansprüche 13 bis 15, wobei die ersten und zweiten Steuermittel zum Schließen der Ventile (15-19), die an jeweiligen Enden des Saugfördersystems (1) angeordnet sind und/oder das Saugfördersystem (1) in Unterabschnitte unterteilen, konfiguriert sind, wenn das unter Druck befindliche Gas an das Saugfördersystem (1) oder an einen jeweiligen Unterabschnitt davon angelegt wird.

17. Das Saugfördersystem nach Anspruch 16, wobei die ersten und zweiten Steuermittel zum Schließen der Ventile (15-19) konfiguriert sind, so dass das unter Druck befindliche Gas angelegt wird, indem eine Quelle (50) eines unter Druck befindlichen Gases mit dem Saugfördersystem (1) oder mit dem jeweiligen Unterabschnitt verbunden wird.

18. Das Saugfördersystem nach einem der Ansprüche 13 bis 17, wobei die ersten und zweiten Steuermittel zur Durchführung eines Schrittes der Wiederaufnahme eines normalen Betriebszustandes des Saugfördersystems (1) konfiguriert sind, das die folgenden Schritte umfasst:
Abkoppeln des unter Druck befindlichen Gases von dem Saugfördersystem (1); und
Verbinden des Sauggebläses (10) mit dem Saugfördersystem (1) zur Erzeugung des Fördergasstroms;
wobei der Schritt der Wideraufnahme des normalen Betriebszustandes derart durchgeführt wird, dass:
ein Ventil (18, 19), das zum Abkoppeln des Schüttgut-Aufnahmeabschnitts (8, 9) verwendet wird, langsam geöffnet wird, während die Ventile (15-17), die zum Verbinden des Schüttgut-Abgabeabschnitts (22, 23) verwendet werden, zum langsamen Aufbau eines Vakuums innerhalb des Saugfördersystems (1) geschlossen gehalten werden, und
die Ventile (15-17), die zum Verbinden des Schüttgut-Abgabeabschnitts (22, 23) verwendet werden, geöffnet werden, um das Fördern von Schüttgut von dem Abgabeabschnitt zu dem Schüttgut-Aufnahmeabschnitt (8, 9) zu bewirken.

19. Das Saugfördersystem nach Anspruch 18, wobei die ersten und zweiten Steuermittel derart konfiguriert sind, dass die Schritte der Abkopplung des Sauggebläses (10), des Anlegens des unter Druck befindlichen Gases und der Wiederaufnahme des normalen Betriebszustands des Saugfördersystems (1) wiederholt durchgeführt werden, bis der gemessene Wert unter dem vorbestimmten Grenzwert liegt.

20. Das Saugfördersystem nach einem der Ansprüche 13 bis 19, das ferner ein drittes Steuermittel umfasst, das zum Anlegen des unter Druck befindlichen Gases an einer Stelle, die zwischen einem Rohrgehäuse und einer Auskleidung des Schüttgut-Abgabeabschnitts (22, 23) bereitgestellt ist, zur Verringerung des Anhaftens von Schüttgut an die Auskleidung konfiguriert ist.

21. Das Saugfördersystem nach einem der Ansprüche 13 bis 20, wobei die ersten und zweiten Steuermittel zur Aktivierung eines Bereitschaftsbetriebs des Sauggebläses (10) konfiguriert sind, und zwar durch:
Öffnen eines Gaseinlassventils (31) des Sauggebläses; und
Schließen eines Ventils (33), das das Sauggebläse (10) mit dem Saugfördersystem (1) verbindet, während der Schritt der Abkopplung des Sauggebläses (10) durchgeführt wird.

22. Das Saugfördersystem nach einem der Ansprüche 13 bis 21, wobei die ersten und zweiten Steuermittel zum Abkoppeln des Schüttgut-Abgabeabschnitts (22, 23) oder eines Schüttgut-Lagerbehälters (20, 21), das damit verbunden ist, von dem Saugfördersystem (1) konfiguriert sind, während der Schritt der Abkopplung des Sauggebläses (10) durchgeführt wird.

23. Ein Computerprogrammprodukt zur Verwendung in einem Saugfördersystem (1) nach einem der Ansprüche 13 bis 22, wobei das Computerprogrammprodukt Computerprogramm-Codemittel umfasst, um zu bewirken, dass eine Steuervorrichtung des Saugfördersystems (1) die Schritte eines Verfahrens nach einem der Ansprüche 1 bis 12 bei Ausführung durch ein Datenverarbeitungsmittel der Steuervorrichtung durchführt.

## Revendications

1. Procédé pour transporter sous vide une matière en vrac dans un système de transport sous vide (1) comprenant une pluralité de tubes et de tuyaux souples (3, 5-7), un ventilateur aspirant (10) disposé à une première extrémité de ladite pluralité de tubes et de tuyaux souples (3, 5-7) pour générer un écoulement de gaz de transport à l'intérieur de ladite pluralité de tubes et de tuyaux souples (3, 5-7) et une section de décharge de matière en vrac (2, 4) comprenant un tube ayant une trémie (22, 23),
le système étant **caractérisé par le fait que** le tube de la section de décharge de matière en vrac (2, 4) comprend une paroi externe rigide avec une doublure interne flexible, qu'au moins certains tuyaux souples comprennent des parois flexibles (71), que le ventilateur aspirant est connecté à la section de décharge de matière en vrac (2, 4) par des conduites d'air (40, 42, 43), et qu'un dispositif de commande est prévu pour commander des soupapes (15-18, 34, 56, 60) du système de transport sous vide
le procédé comprenant les étapes suivantes consistant à :
a)
- générer un vide dans les conduites d'air (40, 42, 43) de façon à aspirer les doublures internes flexibles sur la surface interne des tubes rigides pour assurer un conduit optimum pendant le fonctionnement normal ;
b)
- stopper la décharge de la matière en vrac dans l'écoulement d'air de transport ;
- déconnecter le ventilateur aspirant des tubes et des tuyaux souples de transport (3, 5-7) et de la section de décharge de matière en vrac (2, 4) ;
- appliquer du gaz comprimé aux sections de décharge en vrac (2, 4) et aux tuyaux souples, de telle sorte que les doublures internes de matière flexible sont séparées des tubes rigides des sections de décharge en vrac et pour étirer ou gonfler lesdites parois flexibles (71) des tuyaux souples, permettant ainsi de réduire l'adhérence de la matière en vrac auxdites doublures internes des sections de décharge et auxdites parois flexibles.

2. Procédé selon la revendication 1, dans lequel les soupapes (15-19) disposées aux extrémités respectives dudit système de transport sous vide (1) et/ou divisant ledit système de transport sous vide (1) en sous-sections sont fermées lorsque ledit gaz comprimé est appliqué au système de transport sous vide (1) ou à une sous-section respective de celui-ci.

3. Procédé selon la revendication 2, dans lequel ledit gaz comprimé est appliqué par connexion d'une source (50) de gaz comprimé avec ledit système de transport sous vide (1) ou avec ladite sous-section respective.

4. Procédé selon la revendication 3, dans lequel ladite source (50) de gaz comprimé est un compresseur destiné à délivrer de l'air comprimé.

5. Procédé selon l'une quelconque des revendications 2 à 4, comprenant en outre l'étape de reprise d'une condition de fonctionnement normal dudit système de transport sous vide (1) comprenant :
- la déconnexion dudit gaz comprimé dudit système de transport sous vide (1) ; et
- la connexion dudit ventilateur aspirant (10) audit système de transport sous vide (1) pour générer ledit écoulement de gaz de transport ;
ladite étape de reprise de ladite condition de fonctionnement normal comprenant en outre :
- l'ouverture lente d'une soupape (18, 19) utilisée pour déconnecter ladite section de réception de matière en vrac (8, 9) tout en maintenant fermées les soupapes (15-17) utilisées pour la connexion de ladite section de décharge de matière en vrac (22, 23) pour accumuler lentement un vide à l'intérieur du système de transport sous vide (1) et
- l'ouverture desdites soupapes (15-17) utilisées pour connecter ladite section de décharge de matière en vrac (22, 23) pour amener un transport de la matière en vrac de ladite section de décharge à ladite section de réception de matière en vrac (8, 9).

6. Procédé selon la revendication 5, dans lequel lesdites étapes de déconnexion dudit ventilateur aspirant (10), d'application du gaz comprimé et de reprise de ladite condition de fonctionnement normal dudit système de transport sous vide (1) sont effectuées de façon répétée.

7. Procédé selon l'une quelconque des revendications précédentes, comprenant en outre l'étape d'application dudit gaz comprimé à un espace situé entre un boîtier de tube et une matière de doublure de ladite section de décharge de matière en vrac (22, 23) pour réduire l'adhérence de la matière en vrac à ladite matière de doublure.

8. Procédé selon l'une quelconque des revendications précédentes, dans lequel ladite étape de déconnexion dudit ventilateur aspirant (10) comprend les étapes consistant à :
- ouvrir une soupape d'entrée de gaz (31) dudit ventilateur aspirant ; et
- fermer une soupape (33) reliant ledit ventilateur aspirant (10) avec ledit système de transport sous vide (1) ;
pour provoquer un fonctionnement en mode attente dudit ventilateur aspirant (10).

9. Procédé selon l'une quelconque des revendications précédentes, dans lequel ladite étape de déconnexion dudit ventilateur aspirant (10) comprend en outre :
- la déconnexion de ladite section de décharge de matière en vrac (22, 23), ou d'un conteneur de stockage de matière en vrac (20, 21) connecté à celui-ci, dudit système de transport sous vide (1).

10. Procédé selon l'une quelconque des revendications précédentes, dans lequel ledit ventilateur aspirant (10) pompe de l'air chaud dans une entrée (19) à une seconde extrémité dudit système de transport sous vide (1).

11. Procédé selon l'une quelconque des revendications précédentes, comprenant en outre les étapes consistant à :
- déterminer une valeur mesurée indicative d'une étendue de bouchage dudit système de transport sous vide (1) ou d'une sous-section de celui-ci, et
- initier automatiquement lesdites étapes de déconnexion dudit ventilateur aspirant (10) et d'application de gaz comprimé si ladite valeur mesurée dépasse une valeur de seuil prédéterminée.

12. Procédé selon la revendication 10, dans lequel ladite valeur mesurée est représentative d'une consommation de puissance dudit ventilateur aspirant (10) et/ou d'une chute de pression dans ledit système de transport sous vide (1).

13. Système de transport sous vide (1) pour transporter sous vide de la matière en vrac, comprenant :
- une pluralité de tubes et de tuyaux souples (3, 5-7), un ventilateur aspirant (10) disposé à une première extrémité de ladite pluralité de tubes et de tuyaux souples (3, 5-7) pour générer un écoulement de gaz de transport à l'intérieur de ladite pluralité de tubes et de tuyaux souples (3, 5-7) et une section de décharge de matière en vrac (2, 4) comprenant un tube ayant une trémie (22, 23),
**caractérisé par le fait que :**
- le tube de la section de décharge de matière en vrac (2, 4) comprend une paroi externe rigide ayant une doublure interne flexible,
- au moins certains tuyaux souples comprennent des parois flexibles (71),
- le ventilateur aspirant est connecté à la section de décharge de matière en vrac (2, 4) par des conduites d'air (40, 42, 43) capables d'aspirer les doublures internes flexibles sur la surface interne des tubes rigides pour assurer un conduit optimum pendant le fonctionnement normal,
- un dispositif de commande est prévu, comprenant
- des soupapes rotatives (24, 25) capables d'arrêter la décharge de la matière en vrac dans l'écoulement d'air de transport ;
- des premières soupapes (15-18, 34) pour déconnecter le ventilateur aspirant des tubes et des tuyaux souples de transport (3, 5-7) et de la section de décharge de matière en vrac (2, 4) ;
- des secondes soupapes (56, 60) pour appliquer du gaz comprimé aux sections de décharge de matière en vrac (2, 4) et aux tuyaux souples, de telle sorte que les doublures internes de matière flexible sont séparées des tubes rigides des sections de décharge de matière en vrac et pour étirer ou gonfler lesdites parois flexibles (71) des tuyaux souples, permettant ainsi de réduire l'adhérence de la matière en vrac auxdites doublures internes des sections de décharge et auxdites parois flexibles.

14. Système de transport sous vide selon la revendication 13, comprenant en outre :
- une section de décharge de matière en vrac (22, 23) pour décharger la matière en vrac dans ledit système de transport sous vide (1) et
- une section de réception de matière en vrac (8, 9) communiquant avec ledit ventilateur aspirant (10), pour recevoir la matière en vrac transportée par ledit écoulement de gaz à partir de ladite section de décharge de matière en vrac (22, 23).

15. Système de transport sous vide selon l'une des revendications 13 ou 14, comprenant en outre au moins un moyen de mesure pour mesurer une valeur mesurée indicative de l'étendue d'un bouchage dudit système de transport sous vide (1) ou d'une sous-section de celui-ci, ledit dispositif de commande étant configuré pour actionner lesdits premier et second moyens de commande si ladite valeur mesurée dépasse une valeur de seuil prédéterminée.

16. Système de transport sous vide selon l'une quelconque des revendications 13 à 15, dans lequel lesdits premier et second moyens de commande sont configurés pour fermer les soupapes (15-19) disposées aux extrémités réceptives dudit système de transport sous vide (1) et/ou divisant ledit système transport sous vide (1) en sous-sections, lorsque ledit gaz comprimé est appliqué audit système de transports sous vide (1) ou à une sous-section respective de celui-ci.

17. Système de transport sous vide selon la revendication 16, dans lequel lesdits premier et second moyens de commande sont configurés pour fermer lesdites soupapes (15-19) de telle sorte que ledit gaz comprimé est appliqué par connexion d'une source (50) de gaz comprimé avec ledit système de transport sous vide (1) ou avec ladite sous-section respective.

18. Système de transport sous vide selon l'une quelconque des revendications 13 à 17, dans lequel lesdits premier et second moyens de commande sont configurés pour effectuer une étape de reprise d'une condition de fonctionnement normal dudit système de transport sous vide (1) comprenant les étapes consistant à :
- déconnecter ledit gaz comprimé dudit système de transport sous vide (1) ; et
- connecter ledit ventilateur aspirant (10) avec ledit système de transport sous vide (1) pour générer ledit écoulement de gaz de transport ;
ladite étape de reprise de la condition de fonctionnement normal étant effectuée de telle sorte que :
- une soupape (18, 19) utilisée pour déconnecter ladite section de réception de matière en vrac (8, 9) est ouverte lentement tout en maintenant fermées les soupapes (15-17) utilisées pour connecter ladite section de décharge de matière en vrac (22, 23) pour accumuler lentement un vide à l'intérieur dudit système de transport sous vide (1) ; et
- lesdites soupapes (15-17) utilisées pour connecter ladite section de décharge de matière en vrac (22, 23) sont ouvertes pour provoquer un transport de la matière en vrac de ladite section de décharge à ladite section de réception de matière en vrac (8, 9).

19. Système de transport sous vide selon la revendication 18, dans lequel lesdits premier et second moyens de commande sont configurés de telle sorte que lesdites étapes de déconnexion dudit ventilateur aspirant (10), d'application du gaz comprimé et de reprise de ladite condition de fonctionnement normal dudit système de transport sous vide (1) sont effectuées de façon répétée jusqu'à ce que ladite valeur mesurée soit inférieure à ladite valeur de seuil prédéterminée.

20. Système de transport sous vide selon l'une quelconque des revendications 13 à 19, comprenant en outre un troisième moyen de commande configuré pour appliquer ledit gaz comprimé à un espace situé entre un boîtier de tube et une matière de doublure de ladite section de décharge de matière en vrac (22, 23) pour réduire l'adhérence de la matière en vrac à ladite matière de doublure.

21. Système de transport sous vide selon l'une quelconque des revendications 13 à 20, dans lequel lesdits premier et second moyens de commande sont configurés pour permettre un fonctionnement en mode attente dudit ventilateur aspirant (10) par :
- ouverture d'une soupape d'entrée de gaz (31) dudit ventilateur aspirant et
- fermeture d'une soupape (33) connectant ledit ventilateur aspirant (10) avec ledit système de transport sous vide (1) tout en effectuant ladite étape de déconnexion dudit ventilateur aspirant (10).

22. Système de transport sous vide selon l'une quelconque des revendications 13 à 21, dans lequel lesdits premier et second moyens de commande sont configurés pour déconnecter ladite section de décharge de matière en vrac (22, 23), ou un conteneur de stockage de matière en vrac (20, 21) connecté à celle-ci, dudit système de transport sous vide (1) tout en effectuant ladite étape de déconnexion dudit ventilateur aspirant (10).

23. Produit de programme d'ordinateur, destiné à être utilisé dans un système de transport sous vide (1) conformément à l'une quelconque des revendications 13 à 22, le produit de programme d'ordinateur comprenant un moyen de code de programme d'ordinateur pour amener un dispositif de commande dudit système de transport sous vide (1) à effectuer les étapes d'un procédé tel que défini à l'une quelconque des revendications 1 à 12, lorsqu'il est exécuté par un moyen de traitement de données dudit dispositif de commande.
